# FASCICULE DE BREVET EUROPEEN

(11) **EP 3 172 080 B1**
(45) Date de publication et mention de la délivrance du brevet: **18.03.2020**
(21) Numéro de dépôt: 15751046.2
(22) Date de dépôt: 29.06.2015
(51) Int. Cl.: B60N 2/02, B60N 2/08, B60N 2/22

(54) **SIÈGE DE VÉHICULE ET PROCÉDÉ DE RÉGLAGE D'UN SIÈGE DE VÉHICULE**
FAHRZEUGSITZ UND VERFAHREN ZUR EINSTELLUNG EINES FAHRZEUGSITZES
VEHICLE SEAT AND METHOD FOR ADJUSTING A VEHICLE SEAT

(30) Priorité: 25.07.2014 FR 1457232
(43) Date de publication de la demande: 31.05.2017
(73) Titulaire: FAURECIA Sièges d'Automobile, 92000 Nanterre (FR)
(72) Inventeur: FERRE, Ludovic, 61100 Flers (FR); REY, Jean-Noël, 61100 Flers (FR)
(74) Mandataire: Plasseraud IP
(86) Numéro de dépôt international: PCT/FR2015/051777
(87) Numéro de publication internationale: WO 2016/012684

(56) Documents cités:
- DE-A1-102011 120 854
- FR-A1- 2 759 330
- US-A- 5 348 373
- US-A1- 2005 248 302
- US-A1- 2008 012 411
- US-A1- 2008 012 411
- US-A1- 2009 134 679

## Description

La présente invention est relative à un siège de véhicule et à un procédé de réglage d'un siège tel de véhicule.

Plus particulièrement, l'invention se rapporte à un siège de véhicule comprenant :
- une assise,
- un dossier monté pivotant sur l'assise, par exemple autour d'au moins un axe de rotation,
- un mécanisme d'articulation adapté pour régler la position angulaire du dossier par rapport à l'assise, le mécanisme d'articulation comportant :
   - une première armature destinée à être fixée sur l'assise et une deuxième armature destinée à être fixée sur le dossier, par exemple la première armature et la deuxième armature étant montées rotatives l'une par rapport à l'autre autour de l' axe de rotation,
   - un dispositif de blocage de la position angulaire de la deuxième armature par rapport à la première armature, le dispositif de blocage étant mobile entre une position de blocage dans laquelle ledit organe de déblocage fixe la position angulaire de la deuxième armature par rapport à la première armature et une position de déblocage dans laquelle ledit dispositif de blocage permet à la deuxième armature de se déplacer par rapport à la première armature,
- un mécanisme de guidage comportant :
   - une glissière comprenant un premier profilé et un second profilé s'étendant selon une direction longitudinale et montés coulissant l'un par rapport à l'autre selon la direction longitudinale, en particulier le second profilé étant fixé solidaire de la première armature du mécanisme d'articulation, et
- un dispositif de verrouillage monté mobile entre une position de verrouillage, dans laquelle la position du second profilé par rapport au premier profilé est verrouillée, et une position de déverrouillage, dans laquelle ledit dispositif de verrouillage permet au second profilé de se déplacer par rapport au premier profilé.

Le document US7374243B2 décrit un exemple de siège de véhicule avec un dispositif d'actionnement agissant sur la position relative d'un premier profilé de glissière par rapport à un second profilé de glissière et sur la position relative de l'assise et du dossier pour le rabattement du siège afin de laisser un passage plus large à un occupant du véhicule pour entrer dans l'habitacle intérieur d'un véhicule.

Le système décrit dans le document US7374243B2 permet plus particulièrement de rabattre entièrement l'assise et le dossier d'un siège l'un contre l'autre avant de déverrouiller le siège en translation.

Le système décrit dans US7374243B2 impose un séquençage de ces deux actions afin de permettre une entrée plus facile dans l'habitacle d'un véhicule. Pour réaliser le séquençage particulier (et ainsi éviter au siège une translation avant son rabattement, ce qui réduirait le gain d'espace souhaité pour l'entrée du passager), le système décrit dans US7374243B2 comporte un capteur et une boucle d'asservissement évitant une translation prématurée du siège avant que le dossier et l'assise soit rabattus.

Ainsi le système décrit dans US7374243B2 est lourd à mettre en œuvre et complexe, avec l'utilisation d'une unité de contrôle importante, et trouve une application uniquement pour l'escamotage d'un siège de véhicule automobile.

Par ailleurs, le document US2008/012411 décrit un siège du type susmentionné qui comporte en outre un dispositif d'actionnement, unique, adapté pour fonctionner sélectivement soit dans un mode de commande de du dossier, en agissant sur le dispositif de blocage pour entraîner un déplacement du dispositif de blocage vers la position de déblocage, soit dans un mode de commande de la glissière en agissant sur le dispositif de verrouillage pour entraîner un déplacement du dispositif de verrouillage vers la position de déverrouillage, le dispositif d'actionnement étant commandé par des moyens de commande actionnables par un utilisateur pour faire fonctionner le dispositif d'actionnement soit dans le mode de commande du dossier, soit dans le mode de commande de la glissière.

Par ailleurs, US 2009/0134679 décrit un dispositif de commande sous forme d'un bras de commande unique pour commander le réglage de l'inclinaison d'un siège de véhicule et le réglage d'un mécanisme de soutien lombaire. La poignée est déplacée dans un premier sens pour libérer le mécanisme d'inclinaison du dossier sans affecter le mécanisme de soutien lombaire. La même poignée est déplacée dans une seconde direction pour actionner le mécanisme de soutien lombaire sans affecter le mécanisme d'inclinaison.

La présente invention a notamment pour but de réduire la complexité des mécanismes d'articulation et de guidage de sièges de véhicule. La présente invention a notamment pour but d'allier à la fois une simplicité de fonctionnement, une assistance au réglage et une rapidité de fonctionnement d'un siège de véhicule comprenant des mécanismes d'articulation et de guidage, notamment pour permettre un réglage en confort du siège de véhicule.

A cet effet, selon l'invention, un siège du genre en question est caractérisé en ce que le siège comprend en outre un organe de transmission actionné par le dispositif d'actionnement, l'organe de transmission étant agencé entre le dispositif d'actionnement et les dispositif de blocage et dispositif de verrouillage, l'organe de transmission étant adapté pour déplacer le dispositif de verrouillage vers la position de déverrouillage et le dispositif de blocage vers la position de déblocage, et en ce que le siège comporte en outre un premier organe de commande actionnable par un utilisateur pour faire fonctionner le dispositif d'actionnement dans le mode de commande du dossier et un deuxième organe de commande actionnables par un utilisateur pour faire fonctionner le dispositif d'actionnement dans le mode de commande de la glissière ;.

Grâce à ces dispositions, on réalise un siège simple à mettre en œuvre, avec un nombre de pièces réduit tout en assurant une sécurité de fonctionnement du dispositif, une manœuvrabilité simple pour un utilisateur et un confort accru. En outre, en réduisant le nombre de pièces, on réduit également le poids et l'encombrement de tels systèmes. Ces résultats sont obtenus notamment parce qu'un seul organe (par exemple une came ou autre) transmet un mouvement en sortie du dispositif d'actionnement, soit au dispositif de blocage, soit au dispositif de verrouillage. La commande en entrée du dispositif d'actionnement, peut prendre toutes formes connues et peut notamment être unique ou double, en fonction des choix d'ergonomie effectués par le concepteur du siège.

Dans des modes de réalisation préférés de l'invention, on peut éventuellement avoir recours en outre à l'une et/ou à l'autre des dispositions suivantes :
- le siège comporte en outre au moins un organe de commande actionnable par un utilisateur pour faire fonctionner le dispositif d'actionnement ;
- l'organe de transmission est entraîné par le dispositif d'actionnement soit dans un premier sens pour déplacer le dispositif de verrouillage dans la position de déverrouillage, soit dans un deuxième sens, opposé au premier sens, pour déplacer le dispositif de blocage dans la position de déblocage ;
- le dispositif d'actionnement est commandé pour faire fonctionner le dispositif d'actionnement soit dans le mode de commande du dossier, soit dans le mode de commande de la glissière, indépendamment de la position angulaire de la deuxième armature par rapport à la première armature ;
- le premier organe de commande et le deuxième organe de commande sont directement reliés au dispositif d'actionnement. Ainsi, il n'y a pas de confusion possible pour un utilisateur entre le réglage du dossier et de la glissière ;
- le dispositif de blocage est sollicité élastiquement vers la position de blocage. En l'absence de commande spécifique, la position relative de la première et de la deuxième armature est fixe ;
- le dispositif de verrouillage est sollicité élastiquement vers la position de verrouillage. En l'absence de commande spécifique, la position relative du premier profilé et du second profilé est fixe ;
- l'organe de transmission est monté rotatif autour d'un axe de rotation et est actionnable par le dispositif d'actionnement dans un premier sens pour déplacer le dispositif de verrouillage dans la position de déverrouillage et dans un deuxième sens, opposé au premier sens, pour déplacer le dispositif de blocage dans la position de déblocage. Ainsi, l'organe de transmission ne pouvant tourner simultanément dans les premier et deuxième sens de rotation, il n'est possible de commander que l'un des dispositifs à la fois, ce qui permet d'augmenter la sécurité et le confort d'utilisation du siège ;
- le dispositif de verrouillage comporte un organe de déverrouillage et un pion de déverrouillage, l'organe de déverrouillage est monté mobile entre une position inactive dans laquelle il est à distance du pion de déverrouillage et une position active dans laquelle il vient exercer un effort sur le pion de déverrouillage, notamment pour forcer le pion de déverrouillage à l'encontre de la sollicitation élastique adaptée pour maintenir le premier profilé fixe par rapport au deuxième profilé ;
- l'organe de transmission vient en contact avec l'organe de déverrouillage pour le déplacer de la position inactive vers la position active. Plus spécifiquement, l'organe de transmission agit directement sur l'organe de déverrouillage ;
- l'organe de transmission est une came ;
- le dispositif de blocage comporte un organe d'entraînement assemblé sur l'organe de transmission pour commander le déblocage de la deuxième armature par rapport à la première armature ;
- l'organe d'entraînement est un câble ;
- d'entraînement comprend une première extrémité et une deuxième extrémité, la première extrémité étant assemblée à la came, la deuxième extrémité coopérant directement avec le dispositif de blocage. Le câble relie directement la came au mécanisme d'armatures ;
- la première extrémité du câble comporte un pion de retenu du câble sur l'organe de transmission de sorte à ce que la rotation de l'organe de transmission dans le deuxième sens entraine un enroulement du câble autour de la came. Ainsi, la rotation de l'organe de transmission dans le deuxième sens assure une traction du câble ;
- l'organe de transmission comporte une rainure, dans laquelle le câble est destiné à venir se loger lors de son enroulement. La rainure assure la retenue du câble sur la came ;
- le dispositif d'actionnement est fixé sur la glissière. La fixation du dispositif d'actionnement sur la glissière est simple à mettre en œuvre ;
- le dispositif d'actionnement est un actionneur électrique et/ou un moteur piézoélectrique et/ou comporte un alliage à mémoire de forme. Plusieurs types d'organes d'actionnement peuvent être compatibles avec le siège ;
- le dispositif d'actionnement est un actionneur électrique coopérant avec un motoréducteur réversible ;
- un ressort de rappel est associé au dispositif d'actionnement. Le ressort de rappel permet notamment, en l'absence d'alimentation électrique de l'actionneur électrique, un retour élastique de l'actionneur électrique vers une position de repos, dans laquelle le dispositif d'actionnement n'agit ni sur le dispositif de blocage, ni sur le dispositif de verrouillage. Ainsi, on peut notamment permettre aux dispositifs de blocage et de verrouillage de retrouver leurs positions « stables » en l'absence de commande spécifique sur le dispositif d'actionnement ;
- le siège comporte une seconde glissière et un second dispositif de verrouillage, le second dispositif de verrouillage étant relié au dispositif de verrouillage de la première glissière par une traverse. Ainsi, les dispositifs de verrouillage des première et deuxième glissières peuvent être actionnés de façon simultanée, notamment pour commander de façon simultané le déverrouillage des première et second glissière et ainsi permettre le coulissement simultané des seconds profilés des première et seconde glissières par rapport aux premiers profilés des première et seconde glissières.

L'invention vise également un procédé pour régler la position d'un siège tel que décrit comportant les étapes suivantes :
- commander le dispositif d'actionnement dans un mode de commande de la glissière et déplacer le second profilé par rapport au premier profilé de sorte à régler la position longitudinale de l'assise du siège,
- commander le dispositif d'actionnement dans un mode de commande du dossier et déplacer le dossier par rapport à l'assise de sorte à régler la position angulaire du dossier par rapport à l'assise,
les étapes étant indépendantes l'une de l'autre, l'une pouvant avoir lieu avant, après ou en l'absence de l'autre.

Bien entendu les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles :
- la figure 1 est une vue schématique d'un siège de véhicule selon l'invention comprenant un mécanisme de guidage, un mécanisme d'articulation et un dispositif d'actionnement,
- la figure 2 est une vue en perspective agrandie du mécanisme de guidage, du mécanisme d'articulation et du dispositif d'actionnement de la figure 1,
- la figure 3 est une vue schématique de détail selon le repère III de la figure 2, et
- la figure 4 est une vue en perspective d'un organe de déverrouillage du mécanisme de guidage de la figure 1.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

Par souci de clarté, seuls les éléments utiles à la compréhension des modes de réalisation décrits ont été représentés et seront détaillés.

Dans la description qui suit, lorsque l'on fait référence à des qualificatifs de position absolue, tels que les termes 'avant', 'arrière', 'haut', 'bas', 'gauche', 'droite', etc., ou relative, tels que les termes 'dessus', 'dessous', 'supérieur', 'inférieur', etc., ou à des qualificatifs d'orientation, il est fait référence à un siège dans une position normale d'utilisation de celui-ci dans le sens de progression ordinaire du véhicule.

En l'espèce, dans la description qui suit, les termes 'dispositif de verrouillage', 'dispositif de blocage', devront être interprétés dans en sens large pour qualifier un dispositif adapté pour réaliser une action destinée à rendre immobile ou à rendre mobile, un premier élément par rapport à un deuxième élément, quelle que soit la position initiale relative des premier et deuxième éléments.

De façon similaire, dans la description qui suit, les termes 'organe de déverrouillage' et 'organe de déblocage' d'un premier élément par rapport à un deuxième élément devront être interprétés dans en sens large pour qualifier un organe adapté pour mettre en œuvre une action liée au premier et/ou au deuxième élément destinée à rendre mobile le premier élément par rapport au deuxième élément quelle que soit la position relative initiale du premier élément par rapport au deuxième élément.

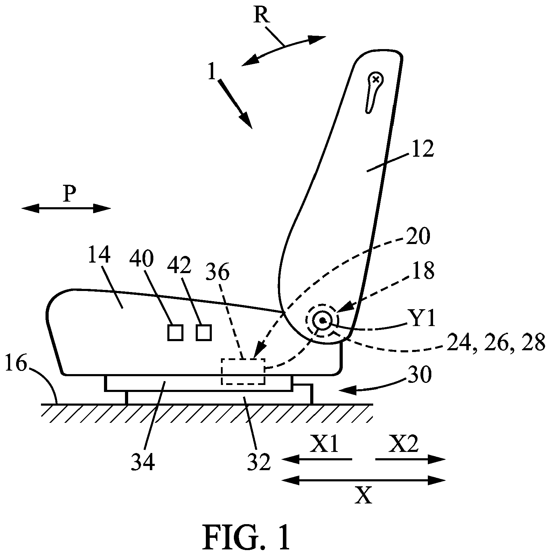

La figure 1 est une vue schématique d'un siège 1, en particulier un siège 1 de véhicule selon l'invention. Plus particulièrement la figure 1 représente le siège 1 comportant un dossier 12 monté pivotant autour d'au moins un axe de pivotement Y1 sur une assise 14. L'assise 14 est elle-même montée mobile en translation sur une structure fixe 16, notamment un plancher du véhicule.

Le siège 1 est tel qu'il est possible de régler une inclinaison R du dossier 12 par rapport à l'assise 14 et une position P du siège 1 par rapport à la structure fixe 16.

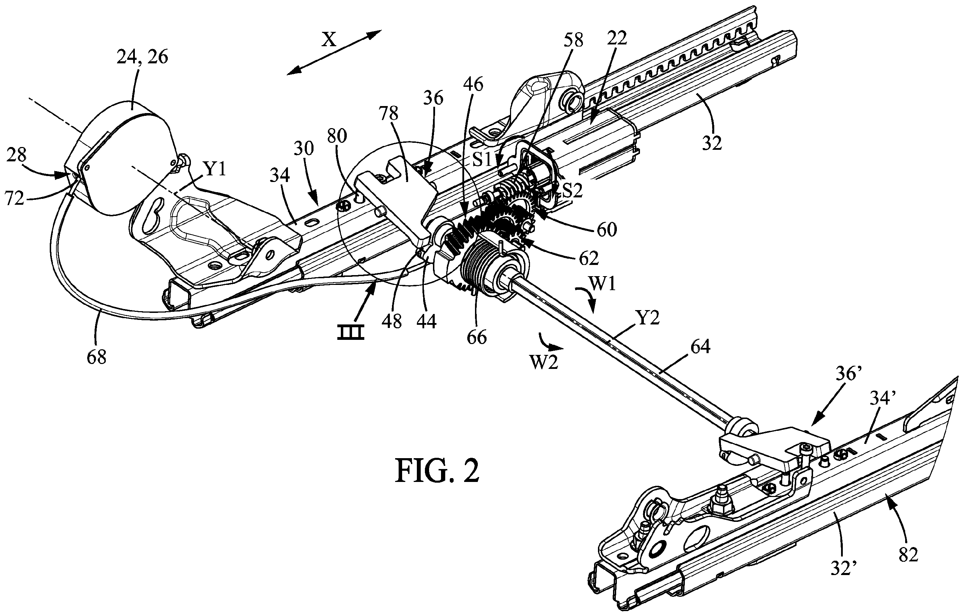

En l'espèce, le siège 1, tel que représenté notamment sur la figure 1, comporte un mécanisme d'articulation 18 adapté pour régler l'inclinaison R du dossier 12, un mécanisme de guidage 20 adapté pour régler la position P du siège 1 par rapport à la structure fixe 16 et un dispositif d'actionnement 22 (visible sur la figure 2).

Le mécanisme d'articulation 18 comporte une première armature 24. La première armature 24 est solidarisée à un élément structurel de l'assise 14. Par exemple, la première armature 24 peut être formée par un flasque métallique en forme de disque ayant pour normale l'axe de pivotement Y1.

Le mécanisme d'articulation 18 comporte une deuxième armature 26. Par exemple, la deuxième armature 26 est solidarisée à un élément structurel du dossier 12. La deuxième armature 26 peut être, par exemple, formée par un flasque métallique en forme de disque ayant pour normale l'axe de pivotement Y1.

La première armature 24 et la deuxième armature 26 sont montées rotatives l'une par rapport à l'autre autour de l'axe de pivotement Y1. Par exemple, la première armature 24 et la deuxième armature 26 peuvent être reliées entre elles par un dispositif de rotation (non représenté) assurant une rotation aisée entre la première armature 24 et la deuxième armature 26. Ce dispositif de rotation est classique et ne sera pas décrit plus en détail.

Le mécanisme d'articulation 18 comporte en outre un dispositif de blocage 28 apte à maintenir ou à définir une position angulaire de la deuxième armature 26 par rapport à la première armature 24. Ainsi, un utilisateur du siège 1, après avoir choisi la position angulaire du dossier 12 par rapport à l'assise 14 qui lui convient pourra bloquer cette position angulaire et la rendre stable. Plus précisément, le dispositif de blocage 28 est mobile entre une position de blocage et une position de déblocage. Dans la position de blocage, le dispositif de blocage 28 fixe la position angulaire de la deuxième armature 26 par rapport à la première armature 24. Ainsi, en position de blocage du dispositif de blocage 28 la deuxième armature 26 ne peut se déplacer par rapport à la première armature 24 autour de l'axe de pivotement Y1. En d'autres termes, le dossier 12 ne peut se déplacer par rapport à l'assise 14. Par exemple, le dispositif de blocage 28 agit sur le dispositif de rotation (non représenté) par l'intermédiaire d'un verrou ou tout autre type de structure venant bloquer la rotation. Ce verrou ou ces structures de blocage de la rotation sont classiques et ne seront pas décrit plus en détail. Dans la position de déblocage, le dispositif de blocage 28 permet à la deuxième armature 26 de se déplacer par rapport à la première armature 24 autour de l'axe de pivotement Y1.

Le dispositif de blocage 28 peut être sollicité élastiquement vers la position de blocage. Ainsi, la position de blocage est une position dite « stable ». Toutefois, dans des variantes de réalisation, le dispositif de blocage 28 peut ne pas être sollicité élastiquement vers une position particulière, ou encore avoir deux positions dites « stables », comme, par exemple, la position de blocage et la position de déblocage.

Le siège 1 comprend, comme mentionné ci-dessus, un mécanisme de guidage 20. Le mécanisme de guidage 20 comporte une glissière 30. La glissière 30 permet de régler, par exemple, la position P du siège 1 par rapport à la structure fixe 16, notamment le plancher du véhicule, par un coulissement dans une direction longitudinale X de la glissière, en particulier dans un premier sens X1 (en l'occurrence vers l'arrière) et dans un deuxième sens X2, opposé au premier sens X1 (en l'occurrence vers l'avant).

La glissière 30 comprend un premier profilé 32 et un second profilé 34. Le premier profilé 32 et le second profilé 34 s'étendent selon la direction longitudinale X. Le premier profilé 32 et le second profilé 34 sont montés coulissants l'un par rapport à l'autre selon la direction longitudinale X, dans un premier sens X1 et un deuxième sens X2. Par exemple, le second profilé 34 est assemblé solidaire à un élément structurel de l'assise 14. De même, le premier profilé 32 est, par exemple, solidaire de la structure fixe 16, notamment solidaire du plancher du véhicule. En conséquence, le premier profilé 32 est également appelé profilé fixe ou profilé inférieur. De même, il s'en suit que le second profilé 34 est également appelé profilé mobile ou profilé supérieur.

Afin d'interdire un coulissement du second profilé 34 par rapport au premier profilé 32, le mécanisme de guidage 20 comporte en outre un dispositif de verrouillage 36.

Le dispositif de verrouillage 36 est monté mobile entre une position de verrouillage et une position de déverrouillage. Dans la position de verrouillage, le dispositif de verrouillage 36 verrouille la position du second profilé 34 par rapport au premier profilé 32, empêchant ainsi tout mouvement relatif selon l'axe longitudinal X du second profilé 34 par rapport au premier profilé 32. Dans la position de déverrouillage, le dispositif de verrouillage 36 permet au second profilé 34 de se déplacer par rapport au premier profilé 32.

Le dispositif de verrouillage 36 peut être sollicité élastiquement vers la position de verrouillage. Ainsi, la position de verrouillage est une position dite « stable ». Toutefois, dans des variantes de réalisation, le dispositif de verrouillage 36 peut ne pas être sollicité élastiquement vers une position particulière, ou encore avoir deux positions dites « stables », comme, par exemple, la position de verrouillage et la position de déverrouillage.

Le mécanisme de guidage 20 et le mécanisme d'articulation 18 sont actionnés par un seul et unique dispositif d'actionnement 22. En d'autres termes, le dispositif d'actionnement 22 peut assurer le déplacement du dispositif de blocage 28 notamment vers une position de blocage ou une position de déblocage et du dispositif de verrouillage 36 vers une position verrouillée ou une position déverrouillée.

Par exemple, le dispositif de verrouillage 36 est sollicité élastiquement vers la position de verrouillage, ainsi le dispositif d'actionnement 22 assure le déplacement du dispositif de verrouillage 36 vers la position déverrouillée. De façon similaire, le dispositif de blocage 28 est sollicité élastiquement vers la position de blocage, ainsi le dispositif d'actionnement 22 assure le déplacement du dispositif de blocage 28 vers la position de déblocage.

Ainsi, le dispositif d'actionnement 22 est adapté pour fonctionner sélectivement soit dans un mode de commande du dossier 12 soit dans un mode de commande de la glissière 30.

Dans le mode de commande du dossier 12, le dispositif d'actionnement 22 agit sur le dispositif de blocage 28 pour entraîner un déplacement du dispositif de blocage 28 vers la position de déblocage, notamment.

Dans le mode de commande de la glissière 30, le dispositif d'actionnement 22 agit sur le dispositif de verrouillage 36 pour entraîner un déplacement du dispositif de verrouillage 36 vers la position de déverrouillage, notamment.

En l'espèce, lorsque le dispositif de blocage 28 est sollicité élastiquement vers la position de blocage, le dispositif d'actionnement 22 peut ainsi agir sur le dispositif de blocage 28 pour entraîner un déplacement du dispositif de blocage 28 de la position de blocage vers la position de déblocage.

Lorsque le dispositif de verrouillage 36 est sollicité élastiquement vers la position de verrouillage, le dispositif d'actionnement 22 peut agir sur le dispositif de verrouillage 36 pour entraîner un déplacement du dispositif de verrouillage 36 de la position de verrouillage vers la position de déverrouillage.

Toutefois, dans des variantes de réalisation, le dispositif de blocage 28 peut ne pas être élastiquement sollicité vers la position de blocage. Le dispositif d'actionnement 22 assure le déplacement du dispositif de blocage 28 entre les positions de blocage et de déblocage.

Dans des variantes de réalisation, le dispositif de verrouillage 36 peut ne pas être élastiquement sollicité vers la position de verrouillage. Le dispositif d'actionnement 22 assure le déplacement du dispositif de verrouillage 36 entre les positions de verrouillage et de déverrouillage.

Le dispositif d'actionnement 22 peut être un actionneur électrique. Toutefois, dans des variantes de réalisation, le dispositif d'actionnement 22 peut être un moteur piézoélectrique, également peuvent être envisagés des moteurs type pneumatique ou hydraulique. Le dispositif d'actionnement 22 peut également être composé d'un alliage à mémoire de forme adapté pour se déformer sous des conditions extérieures particulières de sorte à transmettre un mouvement. Le dispositif d'actionnement 22 peut également prendre la forme de n'importe quel élément apte à mettre en mouvement le dispositif de verrouillage 36 et le dispositif de blocage 28.

Le dispositif d'actionnement 22 est, par exemple, fixé sur la glissière 30.

Dans des variantes de réalisation, le dispositif d'actionnement 22 peut être fixé sur le dossier 12 ou à proximité du dossier 12, ou encore à proximité de la première armature 24 et de la deuxième armature 26.

Le dispositif d'actionnement 22 peut être commandé par l'utilisateur par l'intermédiaire de moyens de commande, par exemple par l'intermédiaire d'un organe de commande 40, 42, pour faire fonctionner le dispositif d'actionnement 22 soit dans le mode de commande du dossier 12, soit dans le mode de commande de la glissière 30.

Selon l'invention, le dispositif d'actionnement 22 peut être commandé par l'utilisateur par l'intermédiaire d'un premier organe de commande 40 et un deuxième organe de commande 42. Par exemple, le premier organe de commande 40 commande le dispositif d'actionnement 22 pour qu'il agisse sur le dispositif de blocage 28 (dans le mode de commande du dossier 12). Le deuxième organe de commande 42 peut être actionné, par exemple par un utilisateur, pour qu'il commande le dispositif d'actionnement 22 afin que le dispositif d'actionnement 22 agisse sur le dispositif de verrouillage 36 (dans le mode de commande de la glissière 30) .

En l'espèce, le premier organe de commande 40 et le deuxième organe de commande 42 sont directement reliés au dispositif d'actionnement 22.

Selon une variante non couverte par l'invention, le premier organe de commande 40 et le deuxième organe de commande 42 peuvent être regroupés au sein d'un seul et même organe de commande global. Par exemple, l'organe de commande global peut être sous la forme d'un manche à balai (encore appelé « Joystick » en anglais), sous la forme d'un mono-bouton, ou encore sous la forme de tout autre mécanisme de commande manuel comprenant un unique organe de commande global travaillant avec plusieurs organes commandés.

Le premier organe de commande 40 et le deuxième organe de commande 42 peuvent également être chacun dissociés en une pluralité de sous-organes de commande distincts, chaque sous-organe commandant une fonction précise. Par exemple, un premier sous-organe du premier organe de commande 40 peut commander le dispositif d'actionnement 22 pour qu'il agisse sur le dispositif de blocage 28 dans un premier sens, et un deuxième sous-organe du premier organe de commande 40 peut commander le dispositif d'actionnement 22 pour qu'il agisse sur le dispositif de blocage 28 dans un deuxième sens. De façon similaire, un premier sous-organe du deuxième organe de commande 42 peut commander le dispositif d'actionnement 22 pour qu'il agisse sur le dispositif de blocage 28 dans un premier sens, et un deuxième sous-organe du premier organe de commande 40 peut commander le dispositif d'actionnement 22 pour qu'il agisse sur le dispositif de verrouillage 36 dans un deuxième sens.

Le premier organe de commande 40 et le deuxième organe de commande 42 peuvent en outre être accessibles par un utilisateur sous la forme d'une interface tactile.

Tel que représenté sur la figure 1, le premier organe de commande 40 et le deuxième organe de commande 42 forment deux organes distincts l'un de l'autre. La présence de deux organes de commande 40, 42 différents pour commander le dispositif de blocage 28 pour faire fonctionner le dispositif d'actionnement 22 soit dans le mode de commande du dossier 12, soit dans le mode de commande de la glissière 30 est particulièrement avantageuse en ce qu'elle permet à l'utilisateur d'avoir deux organes distincts pour commander deux dispositifs distincts et évite ainsi une quelconque confusion.

Les organes de commande 40, 42 peuvent être par exemple des boutons poussoirs, ou tout autres interrupteurs.

Le premier organe de commande 40 et le deuxième organe de commende 42 peuvent être agencés à proximité de l'assise 14. Toutefois, dans des variantes de réalisation, le premier organe de commande 40 et le deuxième organe de commende 42 peuvent être agencés de façon délocalisée par rapport à l'assise 14, et peuvent être prévus, par exemple, sur le tableau de bord du véhicule ou à d'autres endroits accessibles de façon ergonomique par l'utilisateur.

En l'occurrence, comme visible sur les figures 2, 3 et 4, le dispositif d'actionnement 22 est relié à un organe de transmission 44 qui lui-même est relié à la fois au dispositif de verrouillage 36 et au dispositif de blocage 28.

L'organe de transmission 44 permet de transmettre un mouvement du dispositif d'actionnement 22 soit au dispositif de blocage 28 soit au dispositif de verrouillage 36. L'organe de transmission 44 est en l'espèce mobile en rotation autour d'un axe de rotation d'organe de transmission Y2.

L'organe de transmission 44 peut comporter une première partie 46 destinée à commander le dispositif de blocage 28 et une deuxième partie 48 destinée à commander le dispositif de verrouillage 36.

L'organe de transmission 44 est, par exemple, tel qu'illustré sur les figures 2, 3 et 4, une came 44. La came 44 comporte un profil de came.

Dans la description qui suit, l'organe de transmission 44 est une came 44. Toutefois, dans des variantes de réalisation, tous types d'organe de transmission connus peuvent être envisagés.

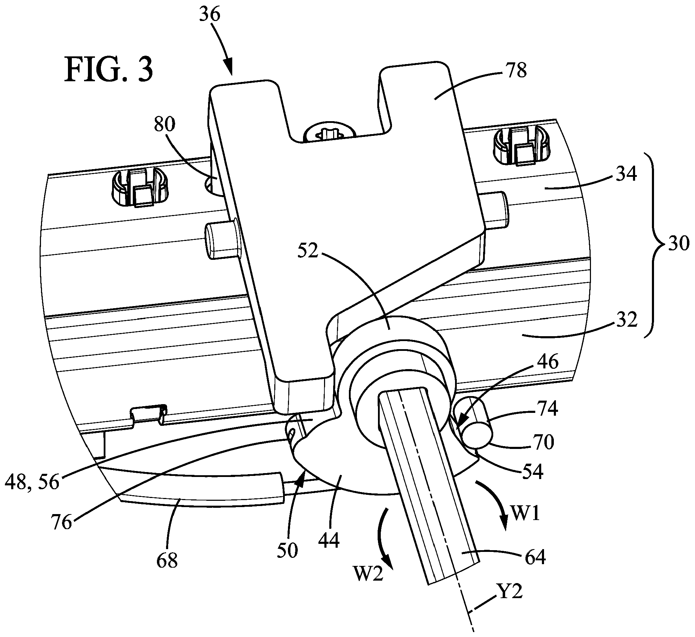

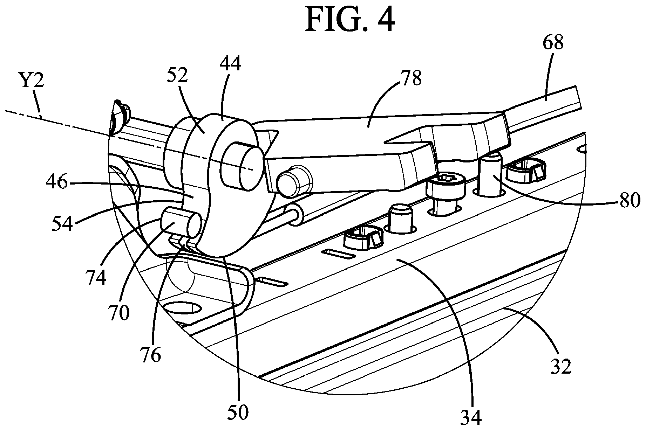

A titre d'exemple, tel que représenté sur les figures 3 et 4, la came 44 comporte, par exemple, une première partie de came 46 destinée à commander le dispositif de blocage 28 et une deuxième partie de came 48 destinée à commander le dispositif de verrouillage 36.

Par exemple, la came 44 comporte deux portions 50, 52, avantageusement sensiblement semi-circulaires, et notamment préférentiellement la première portion 50 de la came 44 a un rayon supérieur à la deuxième portion 52 de la came 44. Un décrochement 54, 56 peut être prévu entre les deux portions 50, 52 de la came 44. Plus précisément, un premier décrochement 54 et un deuxième décrochement 56 peuvent être prévus. Les décrochements 54, 56 assurent la continuité du profil de came entre la première portion 50 et la deuxième portion 52.

La première partie de came 46, commandant le dispositif de blocage 28, peut être prévu au moins en partie sur la première portion 50 de la came 44 et sur le premier décrochement 54. La deuxième partie de came 48, commandant le dispositif de verrouillage 36 peut être prévue au moins en partie sur le deuxième décrochement 56.

Dans le mode de réalisation représenté sur la figure 2, le dispositif d'actionnement 22 comporte une tige d'actionnement 58 mobile en rotation. Un système de transmission 60 est directement assemblé sur la tige d'actionnement 58. Le système de transmission 60 est adapté pour transmettre le mouvement de la tige d'actionnement 58 à une traverse 64 sur laquelle l'organe de transmission 44 (ou came 44 tel que représenté sur les figures) est directement fixée. La traverse 64 est ainsi mobile en rotation autour d'un axe de traverse (qui est en l'occurrence l'axe de rotation d'organe de transmission Y2) .

Le système de transmission 60 peut à titre d'exemple, et tel qu'illustré sur la figure 2 notamment comporter un système roue et vis sans fin 60. Un organe de réduction 62, par exemple un motoréducteur 62, notamment un motoréducteur à engrenages 62, peut être agencé à la suite du système roue et vis sans fin 60.

Le dispositif d'actionnement 22 et le système de transmission 60, et/ou l'organe de réduction 62, sont réversibles. Ainsi, la tige d'actionnement 58 est mobile en rotation autour de son axe dans un premier sens de rotation SI et dans un deuxième sens de rotation S2. Le premier sens de rotation SI est opposé au deuxième sens de rotation S2, tel que représenté sur la figure 2.

Le système de transmission 60 transmet ainsi à la traverse 64, et donc à la came 44 un mouvement de rotation dans un premier sens de rotation W1 et dans un deuxième sens de rotation W2, opposé au premier sens de rotation W1.

Par exemple, un ressort de rappel 66 est prévu, de sorte à permettre, notamment en l'absence d'alimentation, un retour élastique du dispositif d'actionnement 22 vers une position de repos, dans laquelle le dispositif d'actionnement 22 n'agit ni sur le dispositif de blocage 28, ni sur le dispositif de verrouillage 36.

En l'espèce, en l'absence d'actionnement du dispositif d'actionnement 22, la came 44 est dans une position neutre, dans laquelle elle ne commande ni le dispositif de blocage 28 ni le dispositif de verrouillage 36.

Comme précisé ci-dessus la première partie de came 46 commande le dispositif de blocage 28. Plus précisément, comme représenté sur les figures 2 et 3, le dispositif de blocage 28 comporte un organe d'entraînement 68 assemblé sur l'organe de transmission 44. En l'espèce l'organe d'entraînement 68 est assemblé sur la première partie 46 de l'organe de transmission 44 formée au moins en partie par le premier décrochement 54.

Tel que représenté sur les figures, l'organe d'entraînement 68 comporte un câble 68. Le câble 68 s'étend longitudinalement entre une première extrémité 70 et une deuxième extrémité 72. La première extrémité 70 du câble 68 est reliée à la came 44.

Par exemple, la première extrémité 70 du câble 68 comporte un pion de retenu 74 ou une partie coudée qui vient retenir le câble 68 sur la came 44. La deuxième extrémité 72 du câble 68 est agencée vers l'une de la première armature 24 ou de la deuxième armature 26. Par exemple, dans le cas d'un dispositif de rotation assurant une rotation aisée entre la première armature 24 et la deuxième armature 26, la deuxième extrémité 72 de câble 68 est agencée directement à proximité d'un verrou ou d'un pion de déblocage venant débloquer le dispositif de blocage 28. Toutefois, d'autres mécanismes de blocage peuvent être envisagés.

Un déplacement de la came 44 dans le deuxième sens W2 entraine un enroulement du câble 68, notamment en partie autour de la première portion 50 de la came 44. La première portion 50 de came 44 comporte, par exemple, une rainure 76 sur la surface extérieure et le câble 68 vient se loger dans la rainure 76. La rainure 76 permet une retenu du câble 68 autour de la came 44.

L'enroulement en partie autour de la came 44 du câble 68 entraine un effort de traction sur un élément à l'intérieur ou à proximité des première et deuxième armatures 24, 26.

Plus précisément, lorsque le câble 68 s'enroule en partie autour de la came 44 la deuxième extrémité 72 du câble 68 est adapté pour exercé une traction sur un pion de déblocage ou tout élément similaire pour venir débloquer la position angulaire de la deuxième armature 26 par rapport à la première armature 24.

Dans le cas d'un dispositif de blocage 28 élastiquement sollicité vers la position de blocage, en s'enroulant en partie autour de la came 44, le câble 68 vient exercer une force de traction, notamment à l'encontre de la sollicitation élastique vers la position de blocage, pour entraîner le déplacement du dispositif de blocage 28 de la position de blocage vers la position de déblocage.

Un déplacement de la came 44 dans le premier sens W1 vers la position neutre entraine un « déroulement » du câble 68, et le dispositif de blocage 28, par exemple sollicité élastiquement vers la position de blocage, peut revenir dans la position de déblocage, l'effort de traction décrit ci-dessus n'étant plus appliqué. En outre, un déplacement dans le premier sens W1 de la came 44 au-delà de la position neutre de la came 44 a pour effet qu'aucun effort n'est transmis pour forcer la position de déblocage du dispositif de blocage 28, et le dispositif de blocage 28 conserve la position de blocage.

Dans des variantes de réalisation, l'organe de déblocage 28 peut être toute pièce flexible ou rigide que la came 44, lors de la rotation dans le deuxième sens W2 de rotation à partir de la position neutre, actionne dans une direction de sorte à exercer un effort forçant le dispositif de blocage 28 vers la position de blocage.

La deuxième partie de came 48 commande le dispositif de verrouillage 36. Le dispositif de verrouillage 36 comporte, par exemple, tel que représenté sur les figures 2 et 4 notamment, un organe de déverrouillage 78 et au moins un pion de déverrouillage 80. L'organe de déverrouillage 78 est monté mobile entre une position active et une position inactive. Par exemple, dans la position inactive, l'organe de déverrouillage 78 est à distance du pion de déverrouillage 80. La position verrouillée peut être une position dite « stable » du dispositif de verrouillage 36, par exemple, en étant élastiquement sollicité vers la position verrouillée. Ainsi, en l'absence de tout effort sur le pion de déverrouillage 80 (en d'autres termes lorsque l'organe de déverrouillage est à distance du pion de déverrouillage), le second profilé 34 reste dans une position verrouillée par rapport au premier profilé 32.

Dans la position active de l'organe de déverrouillage 78, l'organe de déverrouillage 78 exerce un effort sur le pion de déverrouillage 80. En exerçant un effort sur le pion de déverrouillage 80, l'organe de déverrouillage 78 force le pion de déverrouillage 80 à aller à l'encontre de la sollicitation élastique maintenant le premier profilé 32 fixe par rapport au second profilé 34, permettant un premier déplacement du premier profilé 32 par rapport au second profilé 34.

L'organe de déverrouillage 78 est, par exemple, monté pivotant entre la position inactive et la position active, comme visible notamment sur les figures 2, 3 ou 4. L'organe de déverrouillage 78 comporte une portion adaptée pour venir en contact, par exemple, en contact glissant, avec la deuxième partie de came 48, correspondant notamment sensiblement au deuxième décrochement 56. Lors de la rotation dans le premier sens W1, à partir de la position neutre, la came 44 exerce un effort sur l'organe de déverrouillage 78 de sorte à le faire pivoter de la position inactive vers la position active.

Plus précisément, la partie de l'organe de déverrouillage 78 en contact glissant sur le deuxième décrochement 56 vient se « soulever » lors de la rotation de la came dans le premier sens W1. Ce soulèvement provoque le pivotement de l'organe de déverrouillage 78 et une portion de l'organe de déverrouillage 78 en regard du pion de déverrouillage 80 vient appuyer sur le pion de déverrouillage 80 et transmettre un effort sur ce pion de déverrouillage 80. Ainsi, on vient déverrouiller le second profilé 34 par rapport au premier profilé 32.

Lorsque la came 44 se déplace dans le deuxième sens W2 de rotation, à partir de la position neutre, aucune surface de la came 44 ne vient transmettre un effort à l'organe de déverrouillage 78 qui reste dans la position inactive. En effet, l'organe de déverrouillage 78 est agencé en contact avec le deuxième décrochement 56 du coté de la deuxième portion 52 de la came 44 qui a un diamètre inférieur à la première portion 50 de la came 44. Aussi, aucune surface de la deuxième portion 52 de la came 44 n'est apte à transmettre un effort sur l'organe de déverrouillage 78. Ainsi, la rotation de la came 44 dans le deuxième sens W2, à partir de la position neutre de la came 44 notamment, n'a pas d'impact sur la position verrouillée du dispositif de verrouillage 36.

Il résulte de ce qui précède qu'un seul dispositif d'actionnement 22 peut piloter le déblocage du dispositif de blocage 28 et le déverrouillage du dispositif de verrouillage 36.

Le sens de rotation de la tige d'actionnement détermine lequel du dispositif de blocage 28 ou du dispositif de verrouillage 36 sera commandé, et, par suite, détermine sélectivement soit le mode de commande du dossier 12, soit le mode de commande de la glissière 30. Ainsi, le dispositif de blocage 28 ne peut pas être déplacé dans une position de déblocage lorsque le dispositif de verrouillage 36 est en position déverrouillée. De même, le dispositif de verrouillage 36 ne peut pas être déplacé dans une position de déverrouillage lorsque le dispositif de blocage 28 est en position de déblocage.

Le dispositif d'actionnement 22 actionne ainsi soit le dispositif de blocage 28 soit le dispositif de verrouillage 36.

Comme mentionné précédemment, des variantes de réalisation, le dispositif d'actionnement 22 peut être fixé sur le dossier 12 ou à proximité du dossier 12, ou encore à proximité de la première armature 24 et de la deuxième armature 26. Par exemple, le dispositif d'actionnement 22 peut être fixé sur un coté latéral du dossier 12 à proximité des première et deuxième armatures 24, 26 de sorte à directement commander le mécanisme d'articulation 18.

Par exemple, dans une variante de réalisation, le système de transmission 60 est adapté pour transmettre le mouvement de la tige d'actionnement 58 directement au dispositif de blocage 28 de la position angulaire de la deuxième armature 26 par rapport à la première armature 24, sans organe de transmission faisant interface entre l'organe d'actionnement 22 et le dispositif de blocage 28.

Dans cette variante de réalisation (non représentée), un premier organe de transmission peut être prévu à proximité de l'élément d'actionnement 22 et du système de transmission 60 et un deuxième organe de transmission peut être prévu à proximité de la glissière 30 et du dispositif de verrouillage 36. Le câble 68 est alors relié à la première extrémité au premier organe de transmission et à la deuxième extrémité au deuxième organe de transmission. Le premier organe de transmission permet alors l'enroulement ou le déroulement du câble 68. Le deuxième organe de transmission est adapté pour exercer un effort sur l'organe de déverrouillage 78 pour le déplacer dans la position active. L'enroulement du câble 68 autour du premier organe de transmission entraine un effort de traction de la deuxième extrémité 72 du câble 68 sur le deuxième organe de transmission qui a pour effet de déplacer l'organe de déverrouillage 78 entre la position inactive et la position active décrites précédemment.

Tel que représenté en partie sur la figure 2, une seconde glissière 82 peut être prévue. La seconde glissière 82 est agencée parallèle à la première glissière 30 décrite ci-dessus et lui est sensiblement similaire. La seconde glissière 82 comprend un premier profilé 32' et un second profilé 34' s'étendant selon la direction longitudinale X et montés coulissant l'un par rapport à l'autre selon la direction longitudinale X. Le second profilé 34' de la seconde glissière 82 peut être fixé solidaire de la première armature 24 du mécanisme d'articulation 18. La seconde glissière 82 peut coopérer avec un second dispositif de verrouillage 36' adapté pour verrouiller la position du second profilé 34' par rapport au premier profilé 32'. Le second dispositif de verrouillage 36', afin d'agir de façon synchronisée avec le premier dispositif de verrouillage 36, est relié au dispositif de verrouillage 36 de la première glissière par la traverse 64.

Pour régler la position du siège 1 de véhicule précédemment décrit, différentes étapes peuvent être mises en œuvre.

Dans une première étape, on commande le dispositif d'actionnement 22, par exemple par l'intermédiaire du deuxième organe de commande 42, pour déplacer le dispositif de verrouillage 36 de la position verrouillée vers la position déverrouillée et ainsi autoriser le déplacement du second profilé 34, 34' par rapport au premier profilé 32, 32' de sorte à régler la position P de l'assise 14 du siège 1 par rapport à la structure fixe 16 dans la direction longitudinale X.

Dans une deuxième étape, on commande le dispositif d'actionnement 22, par exemple par l'intermédiaire du premier organe de commande 40, pour déplacer le dispositif de blocage 28 de la position de blocage vers la position de déblocage (mode de commande du dossier 12) et ainsi autoriser le déplacement de la deuxième armature 26 par rapport à la première armature 24 de sorte à régler la position angulaire du dossier 12 par rapport à l'assise 14. On pourra notamment déplacer la première armature 24 par rapport à la deuxième armature 26 d'un certain débattement angulaire, par exemple inférieur à 150°, avantageusement inférieur à 120°, plus particulièrement inférieur à 90° ou encore inférieur à 50°, ou encore inférieur à 30°.

En outre, il est possible de réaliser la deuxième étape avant ou après la première étape. Il est également possible d'effectuer l'une des première et deuxième étapes sans effectuer l'autre. Ainsi le siège 1 permet un réglage en confort de la position du dossier 12 du siège par rapport à l'assise 14 et/ou de la position de l'assise 14 par rapport par exemple au plancher du véhicule. On entend ici par réglage en confort, un réglage permettant d'ajuster la position d'un siège dans un mode d'utilisation de ce siège, notamment lorsque l'utilisateur est en position assise sur le siège 1.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention et notamment toutes combinaisons des différents modes de fonctionnement décrits précédemment, pouvant être pris séparément ou en association.

## Revendications

1. Siège (1) de véhicule comprenant :
- une assise (14),
- un dossier (12) monté pivotant sur l'assise (14),
- un mécanisme d'articulation (18) adapté pour régler la position angulaire du dossier (12) par rapport à l'assise (14), le mécanisme d'articulation comportant :
- une première armature (24) destinée à être fixée sur l'assise (14) et une deuxième armature (26) destinée à être fixée sur le dossier (12),
- un dispositif de blocage (28) de la position angulaire de la deuxième armature (26) par rapport à la première armature (24), le dispositif de blocage (28) étant mobile entre une position de blocage dans laquelle la position angulaire de la deuxième armature (26) par rapport à la première armature (28) est fixe et une position de déblocage dans laquelle la deuxième armature (26) est mobile par rapport à la première armature (24),
- un mécanisme de guidage (20) comportant :
- une glissière (30) comprenant un premier profilé (32) et un second profilé (34) s'étendant selon une direction longitudinale (X) et montés coulissant l'un par rapport à l'autre selon la direction longitudinale (X), et
- un dispositif de verrouillage (36) monté mobile entre une position de verrouillage, dans laquelle la position du second profilé (34) par rapport au premier profilé (32) est verrouillée, et une position de déverrouillage, dans laquelle ledit dispositif de verrouillage (36) permet au second profilé (34) de se déplacer par rapport au premier profilé (32),
- un dispositif d'actionnement (22), unique, adapté pour fonctionner sélectivement :
- soit dans un mode de commande du dossier (12) en agissant sur le dispositif de blocage (28) pour entraîner un déplacement du dispositif de blocage (28) vers la position de déblocage,
- soit dans un mode de commande de la glissière (30) en agissant sur le dispositif de verrouillage (36) pour entraîner un déplacement du dispositif de verrouillage (36) vers la position de déverrouillage,
le dispositif d'actionnement (22) étant commandé par des moyens de commande actionnables par un utilisateur pour faire fonctionner le dispositif d'actionnement (22) soit dans le mode de commande du dossier (12), soit dans le mode de commande de la glissière (30),
**caractérisé en ce qu'il** comprend en outre un organe de transmission (44) actionné par le dispositif d'actionnement (22), l'organe de transmission (44) étant agencé entre le dispositif d'actionnement (22) et les dispositif de blocage (28) et dispositif de verrouillage (36), l'organe de transmission (44) étant adapté pour déplacer le dispositif de verrouillage (36) vers la position de déverrouillage et le dispositif de blocage (28) vers la position de déblocage, et **en ce qu'**il comporte en outre un premier organe de commande (40) actionnable par un utilisateur pour faire fonctionner le dispositif d'actionnement (22) dans le mode de commande du dossier (12) et un deuxième organe de commande (42) actionnable par un utilisateur pour faire fonctionner le dispositif d'actionnement (22) dans le mode de commande de la glissière (30).

2. Siège (1) selon la revendication 1, dans lequel le dispositif d'actionnement (22) est commandé pour faire fonctionner le dispositif d'actionnement soit dans le mode de commande du dossier (12), soit dans le mode de commande de la glissière (30), indépendamment de la position angulaire de la deuxième armature (26) par rapport à la première armature (24).

3. Siège (1) selon l'une quelconque des revendications précédentes, dans lequel le dispositif de blocage (28) est sollicité élastiquement vers la position de blocage et le dispositif de verrouillage (36) est sollicité élastiquement vers la position de verrouillage.

4. Siège (1) selon l'une des revendications 1 à 3, dans lequel le premier organe de commande (40) et le deuxième organe de commande (42) sont directement reliés au dispositif d'actionnement (22).

5. Siège (1) selon l'une quelconque des revendications précédentes, dans lequel l'organe de transmission (44) est monté rotatif autour d'un axe de rotation (Y2) dans un premier sens de rotation (W1) pour déplacer le dispositif de verrouillage (36) dans la position de déverrouillage et dans un deuxième sens de rotation (W2), opposé au premier sens de rotation (W1), pour déplacer le dispositif de blocage (28) dans la position de déblocage.

6. Siège (1) selon l'une quelconque des revendications précédentes, dans lequel le dispositif de verrouillage (36) comporte un organe de déverrouillage (78) et un pion de déverrouillage (80), l'organe de déverrouillage (78) est monté mobile entre une position inactive dans laquelle il est à distance du pion de déverrouillage (80) et une position active dans laquelle il exerce un effort sur le pion de déverrouillage (80), l'organe de transmission (44) venant de préférence en contact avec l'organe de déverrouillage (78) pour le déplacer de la position inactive vers la position active.

7. Siège (1) selon l'une quelconque des revendications précédentes, dans lequel le dispositif de blocage (28) comporte un organe d'entraînement (68) assemblé sur l'organe de transmission (44), pour commander le déblocage de la deuxième armature (26) par rapport à la première armature (24).

8. Siège (1) selon la revendication précédente, dans lequel l'organe d'entraînement (68) est un câble (68), le câble (68) comprenant de préférence une première extrémité (70) et une deuxième extrémité (72), la première extrémité (70) étant assemblée à l'organe de transmission (44), la deuxième extrémité (72) coopérant directement avec le dispositif de blocage (28), la première extrémité (70) comportant, de préférence encore, un pion de retenu (74) du câble (68) sur l'organe de transmission (44) de sorte à ce que la rotation de l'organe de transmission (44) dans le deuxième sens entraine un enroulement du câble (68) autour de l'organe de transmission (44).

9. Siège (1) selon la revendication précédente, dans lequel l'organe de transmission (44) comporte une rainure (76), dans laquelle le câble (68) est destiné à venir se loger lors de son enroulement.

10. Siège (1) selon l'une quelconque des revendications précédentes, dans lequel le dispositif d'actionnement (22) est fixé sur la glissière (30).

11. Siège (1) selon l'une quelconque des revendications précédentes, dans lequel le dispositif d'actionnement (22) est un actionneur électrique réversible coopérant avec un motoréducteur réversible.

12. Siège (1) selon l'une quelconque des revendications précédentes comprenant en outre un ressort de rappel (66) associé au dispositif d'actionnement (22).

13. Siège (1) selon l'une quelconque des revendications précédentes, comprenant en outre une seconde glissière (82) et un second dispositif de verrouillage (36'), le second dispositif de verrouillage (36') étant relié au dispositif de verrouillage (36) de la première glissière (30) par une traverse (64).

14. Procédé pour régler la position d'un siège (1) selon l'une quelconque des revendications précédentes comportant les étapes suivantes :
- commander le dispositif d'actionnement (22) dans un mode de commande de la glissière (30) et déplacer le second profilé (34, 34') par rapport au premier profilé (32, 32') de sorte à régler la position de l'assise (14) du siège (1) selon la direction longitudinale (X),
- commander le dispositif d'actionnement (22) dans un mode de commande du dossier (12) et déplacer le dossier (12) par rapport à l'assise (14) de sorte à régler la position angulaire du dossier (12) par rapport à l'assise (16),
les étapes étant indépendantes l'une de l'autre, l'une pouvant avoir lieu avant, après ou en l'absence de l'autre.

## Patentansprüche

1. Fahrzeugsitz (1), umfassend:
- eine Sitzfläche (14),
- eine Rückenlehne (12), welche schwenkend an der Sitzfläche (14) montiert ist,
- einen Gelenkmechanismus (18), welcher dazu eingerichtet ist, die Winkelposition der Rückenlehne (12) bezüglich der Sitzfläche (14) einzustellen, wobei der Gelenkmechanismus umfasst:
∘ ein erstes Gestell (24), welches dazu vorgesehen ist, an der Sitzfläche (14) befestigt zu sein, und ein zweites Gestell (26), welches dazu vorgesehen ist, an der Rückenlehne (12) befestigt zu sein,
∘ eine Blockiervorrichtung (28) für die Winkelposition des zweiten Gestells (26) bezüglich des ersten Gestells (24), wobei die Blockiervorrichtung (28) zwischen einer Blockierposition, in welcher die Winkelposition des zweiten Gestells (26) bezüglich des ersten Gestells (28) fest ist, und einer Freigabeposition beweglich ist, in welcher das zweite Gestell (26) bezüglich des ersten Gestells beweglich ist,
- einen Führungsmechanismus (20), umfassend:
∘ eine Gleitführung (30), umfassend ein erstes Profil (32) und ein zweites Profil (34), welche sich entlang einer longitudinalen Richtung (X) erstrecken und gegeneinander entlang der longitudinalen Richtung (X) gleitend montiert sind, und
∘ eine Verriegelungsvorrichtung (36), welche beweglich zwischen einer Verriegelungsposition, in welcher die Position des zweiten Profils (34) bezüglich des ersten Profils (32) verriegelt ist, und einer Entriegelungsposition montiert ist, in welcher die Verriegelungsvorrichtung (36) es dem zweiten Profil (34) erlaubt, sich bezüglich des ersten Profils (32) zu verlagern,
- eine einzelne Betätigungsvorrichtung (22), welche dazu eingerichtet ist selektiv betrieben zu werden:
∘ entweder in einem Anweisungsmodus für die Rückenlehne (12), indem auf die Blockiervorrichtung (28) eingewirkt wird, um eine Verlagerung der Blockiervorrichtung (28) in Richtung der Freigabeposition zu bewirken,
∘ oder in einem Anweisungsmodus für die Gleitführung (30), indem auf die Verriegelungsvorrichtung (36) eingewirkt wird, um eine Verlagerung der Verriegelungsvorrichtung (36) in Richtung der Entriegelungsposition zu bewirken,
wobei die Betätigungsvorrichtung (22) durch Anweisungsmittel angewiesen wird, welche von einem Bediener betätigbar sind, um die Betätigungsvorrichtung (22) zu veranlassen, entweder in dem Anweisungsmodus für die Rückenlehne (12) oder in dem Anweisungsmodus für die Gleitführung (30) betrieben zu werden, **dadurch gekennzeichnet, dass** er ferner ein Übertragungsorgan (44) umfasst, welches durch die Betätigungsvorrichtung (22) betätigt wird, wobei das Übertragungsorgan (44) zwischen der Betätigungsvorrichtung (22) und der Blockiervorrichtung (28) und Verriegelungsvorrichtung (36) angeordnet ist, wobei das Übertragungsorgan (44) dazu eingerichtet ist, die Verriegelungsvorrichtung (36) in Richtung der Entriegelungsposition und die Blockiervorrichtung (28) in Richtung der Freigabeposition zu verlagern, und dadurch, dass er ferner ein erstes Anweisungsorgan (40), welches durch einen Benutzer betätigbar, um die Betätigungsvorrichtung (22) zu veranlassen in dem Anweisungsmodus für die Rückenlehne (12) betrieben zu werden, und ein zweites Anweisungsorgan (42) umfasst, welches durch einen Benutzer betätigbar ist, um die Betätigungsvorrichtung (22) zu veranlassen, in dem Anweisungsmodus für die Gleitführung (30) betrieben zu werden.

2. Sitz (1) nach Anspruch 1, wobei die Betätigungsvorrichtung (22) angewiesen wird, um die Betätigungsvorrichtung zu veranlassen, entweder in dem Anweisungsmodus für die Rückenlehne (12) oder in dem Anweisungsmodus für die Gleitführung (30) betrieben zu werden, unabhängig von der Winkelposition des zweiten Gestells (26) bezüglich des ersten Gestells (24).

3. Sitz (1) nach einem der vorhergehenden Ansprüche, wobei die Blockiervorrichtung (28) elastisch in Richtung der Blockierposition vorbelastet ist und die Verriegelungsvorrichtung (36) elastisch in Richtung der Verriegelungsposition vorbelastet ist.

4. Sitz (1) nach einem der Ansprüche 1 bis 3, wobei das erste Anweisungsorgan (40) und das zweite Anweisungsorgan (42) direkt mit der Betätigungsvorrichtung (22) verbunden sind.

5. Sitz (1) nach einem der vorhergehenden Ansprüche, wobei das Übertragungsorgan (44) um eine Rotationsachse (Y2) in einem ersten Rotationssinn (W1) rotierbar montiert ist, um die Verriegelungsvorrichtung (36) in die Entriegelungsposition zu verlagern, sowie in einem zweiten Rotationssinn (W2) entgegengesetzt zu dem ersten Rotationssinn (W1), um die Blockiervorrichtung (28) in die Freigabeposition zu verlagern.

6. Sitz (1) nach einem der vorhergehenden Ansprüche, wobei die Verriegelungsvorrichtung (36) ein Entriegelungsorgan (78) und einen Entriegelungsstift (80) umfasst, wobei das Entriegelungsorgan (78) zwischen einer inaktiven Position, in welcher es in einem Abstand von dem Entriegelungsstift (80) ist, und einer aktiven Position beweglich montiert ist, in welcher es eine Kraft auf den Entriegelungsstift (80) ausübt, wobei das Übertragungsorgan (44) vorzugsweise mit dem Entriegelungsorgan (78) in Kontakt kommt, um es von der inaktiven Position in Richtung der aktiven Position zu verlagern.

7. Sitz (1) nach einem der vorhergehenden Ansprüche, wobei die Blockiervorrichtung (28) ein Antriebsorgan (68) umfasst, welches an dem Übertragungsorgan (44) angeordnet ist, um das Freigaben des zweiten Gestells (26) bezüglich des ersten Gestells (24) anzuweisen.

8. Sitz (1) nach dem vorhergehenden Anspruch, wobei das Antriebsorgan (68) ein Kabel (68) ist, wobei das Kabel (68) vorzugsweise ein erstes Ende (70) und ein zweites Ende (72) umfasst, wobei das erste Ende (70) an dem Übertragungsorgan (44) angebracht ist, wobei das zweite Ende (72) direkt mit der Blockiervorrichtung (28) zusammenwirkt, wobei das erste Ende (70) weiter vorzugsweise einen Haltestift (74) für das Kabel (68) an dem Übertragungsorgan (44) derart umfasst, dass die Rotation des Übertragungsorgans (44) in dem zweiten Sinn ein Wickeln des Kabels (68) um das Übertragungsorgan (44) antreibt.

9. Sitz (1) nach dem vorhergehenden Anspruch, wobei das Übertragungsorgan (44) eine Nut (76) umfasst, in welche das Kabel (68) vorgesehen ist, sich während seines Wickelns einzulegen.

10. Sitz (1) nach einem der vorhergehenden Ansprüche, wobei die Betätigungsvorrichtung (22) an der Gleitführung (30) befestigt ist.

11. Sitz (1) nach einem der vorhergehenden Ansprüche, wobei die Betätigungsvorrichtung (22) ein reversibler elektrischer Aktuator ist, welcher mit einem reversiblen Getriebemotor zusammenwirkt.

12. Sitz (1) nach einem der vorhergehenden Ansprüche, ferner umfassend eine Rückstellfeder (66), welche der Betätigungsvorrichtung (22) zugeordnet ist.

13. Sitz (1) nach einem der vorhergehenden Ansprüche, ferner umfassend eine zweite Gleitführung (82) und eine zweite Verriegelungsvorrichtung (36'), wobei die zweite Verriegelungsvorrichtung (36') mit der Verriegelungsvorrichtung (36) der ersten Gleitführung (30) durch eine Traverse (64) verbunden ist.

14. Verfahren zum Einstellen der Position eines Sitzes (1) nach einem der vorhergehenden Ansprüche, umfassend die folgenden Schritte:
- Anweisen der Betätigungsvorrichtung (22) in einem Anweisungsmodus für die Gleitführung (30) und Verlagern des zweiten Profils (34, 34') bezüglich des ersten Profils (32, 32') derart, dass die Position der Sitzfläche (14) des Sitzes (1) bezüglich der longitudinalen Richtung (X) eingestellt wird,
- Anweisen der Betätigungsvorrichtung (22) in einem Anweisungsmodus für die Rückenlehne (12) und Verlagern der Rückenlehne (12) bezüglich der Sitzfläche (14) derart, dass die Winkelposition der Rückenlehne (12) bezüglich der Sitzfläche (16) eingestellt wird,
wobei die Schritte voneinander unabhängig sind, wobei der eine vor, nach oder in Abwesenheit von dem anderen stattfinden kann.

## Claims

1. Vehicle seat (1) comprising:
- a seating part (14),
- a backrest (12) mounted so as to pivot on the seating part (14),
- a hinge mechanism (18) adapted for adjusting the angular position of the backrest (12) relative to the seating part (14), the hinge mechanism comprising:
- a first frame (24) intended to be fixed to the seating part (14) and a second frame (26) intended to be fixed to the backrest (12),
- a blocking device (28) for maintaining the angular position of the second frame (26) relative to the first frame (24), the blocking device (28) being movable between a blocking position where the angular position of the second frame (26) relative to the first frame (28) is maintained and a release position where the second frame (26) is movable relative to the first frame (24),
- a guide mechanism (20) comprising:
- a track unit (30) comprising a first rail (32) and a second rail (34) both extending in a longitudinal direction (X) and mounted so as to slide relative to one another along the longitudinal direction (X), and
- a locking device (36) mounted so as to be movable between a locking position where the position of the second rail (34) relative to the first rail (32) is locked, and an unlocking position where said locking device (36) allows the second rail (34) to move relative to the first rail (32),
- a single actuation device (22), adapted to operate selectively in either:
- a backrest (12) control mode, acting on the blocking device (28) to cause movement of the blocking device (28) to the release position,
- or a track (30) control mode, acting on the locking device (36) to cause movement of the locking device (36) to the unlocking position,
the actuation device (22) being controlled by control means operable by a user to cause the actuation device (22) to operate either in backrest (12) control mode or track (30) control mode,
**characterized in that** it further comprises a transmission member (44) actuated by the actuation device (22), the transmission member (44) being arranged between the actuation device (22) and the blocking device (28) and locking device (36), the transmission member (44) being adapted for moving the locking device (36) to the unlocking position and the blocking device (28) to the release position, and **in that** it further comprises a first control member (40) operable by a user to operate the actuation device (22) in backrest (12) control mode and a second control member (42) operable by a user to operate the actuation device (22) in track (30) control mode.

2. Seat (1) according to claim 1, wherein the actuation device (22) is controlled so as to operate the actuation device in either backrest (12) control mode or track (30) control mode, independently of the angular position of the second frame (26) relative to the first frame (24).

3. Seat (1) according to any preceding claim, wherein the blocking device (28) is resiliently biased towards the blocking position and the locking device (36) is resiliently biased towards the locking position.

4. Seat (1) according to one of claims 1 to 3, wherein the first control member (40) and the second control member (42) are directly connected to the actuation device (22).

5. Seat (1) according to any preceding claim, wherein the transmission member (44) is mounted so as to rotate about an axis of rotation (Y2) in a first direction of rotation (W1) so as to move the locking device (36) to the unlocking position and in a second direction of rotation (W2), opposite the first direction of rotation (W1), so as to move the blocking device (28) to the release position.

6. Seat (1) according to any preceding claim, wherein the locking device (36) comprises an unlocking member (78) and a unlocking pin (80), the unlocking member (78) is mounted so as to be movable between an inactive position where it is at a distance from the unlocking pin (80) and an active position where it exerts force on the unlocking pin (80), wherein the transmission member (44) preferably comes into contact with the unlocking member (78) so as to move the latter from the inactive position to the active position.

7. Seat (1) according to any of the preceding claims, wherein the blocking device (28) comprises a driving member (68) assembled to the transmission member (44) in order to control the release of the second frame (26) relative to the first frame (24).

8. Seat (1) according to the preceding claim, wherein the driving member (68) is a cable (68), wherein the cable (68) preferably comprises a first end (70) and a second end (72), the first end (70) being assembled to the transmission member (44), the second end (72) cooperating directly with the blocking device (28), wherein the first end (70) more preferably comprises a pin (74) for retaining the cable (68) on the transmission member (44) so that rotation of the transmission member (44) in the second direction causes the cable (68) to wind around the transmission member (44).

9. Seat (1) according to the preceding claim, wherein the transmission member (44) comprises a groove (76) in which the cable (68) is intended to be housed when it is wound.

10. Seat (1) according to any preceding claim, wherein the actuation device (22) is fixed to the track unit (30).

11. Seat (1) according to any preceding claim, wherein the actuation device (22) is a reversible electric actuator cooperating with a reversible gear motor.

12. Seat (1) according to any preceding claim, further comprising a return spring (66) associated with the actuation device (22).

13. Seat (1) according to any preceding claim, further comprising a second track unit (82) and a second locking device (36'), the second locking device (36') being connected to the locking device (36) of the first track unit (30) by a crosspiece (64).

14. Method for adjusting the position of a seat (1) according to any preceding claim, comprising the steps of:
- controlling the actuation device (22) in a track (30) control mode and moving the second rail (34, 34') relative to the first rail (32, 32') so as to adjust the position of the seating part (14) of the seat (1) in the longitudinal direction (X),
- controlling the actuation device (22) in a backrest (12) control mode and moving the backrest (12) relative to the seating part (14) so as to adjust the angular position of the backrest (12) relative to the seating part (16),
the steps being independent of one another, it being possible for one to take place before, after, or in the absence of the other.
